# EUROPÄISCHE PATENTANMELDUNG

(11) **EP 3 050 611 A1**
(43) Veröffentlichungstag der Anmeldung: **03.08.2016**
(21) Anmeldenummer: 15152784.3
(22) Anmeldetag: 28.01.2015
(51) Int. Cl.: B01D 46/52, B01D 46/54, B01D 46/24

(54) **Filterpatrone**

(71) Anmelder: Carl Freudenberg KG, 69469 Weinheim (DE)
(72) Erfinder: Schulz, Karsten, 74924 Neckarbischofsheim (DE); Becker, Jürgen, 67378 Zeiskam (DE); Sieh, Maik, 69207 Sandhausen (DE); Klaus, Jürgen, 69502 Hemsbach (DE)

(57) **Zusammenfassung**

Eine Filterpatrone (1), umfassend ein Filtermedium (2), welches derart ausgeformt ist, dass es einen Zentraldurchgang (3) umfängt, wobei der Zentraldurchgang (3) eine erste Öffnung (4) aufweist und an einem Patronenboden (5) endet und wobei sich das Filtermedium (2) zwischen der ersten Öffnung (4) und dem Patronenboden (5) erstreckt und dabei einen länglichen Filterkörper bildet, ist im Hinblick auf die Aufgabe, eine Filterpatrone anzugeben, welche die mittlere Aufstiegsgeschwindigkeit von Luft beeinflusst und einen möglichst optimalen Filtrationsbetrieb bewirkt, dadurch gekennzeichnet, dass das Filtermedium (2) an einem Ende (6) der Filterpatrone (1) rechteckig oder quadratisch und am anderen Ende (7) rund ausgeformt ist.

## Beschreibung

### Technisches Gebiet

Die Erfindung betrifft eine Filterpatrone gemäß dem Oberbegriff des Patentanspruchs 1.

### Stand der Technik

Die Verwendung von Filterpatronen, insbesondere von runden Filterpatronen, in Entstaubungsanlagen und allgemeinen raumlufttechnischen Anlagen ist bereits bekannt. Vor diesem Hintergrund sind rechteckige oder quadratische Adapter und Flansche an zylindrischen oder ovalen Filterpatronen ebenfalls bekannt geworden.

Des Weiteren ist eine Filterpatrone mit rechteckigem oder quadratischem Querschnitt aus der DE 10 2012 017 890 A1 bekannt geworden. Diese Filterpatrone findet bevorzugt in Lackieranlagen Verwendung.

Derzeit wird in Lackieranlagen mit Lacknasspartikeln belastete Luft durch einen Staubraum gesogen, in dem sich ein Bett aus Kalksteinmehl befindet. Das Kalksteinmehl soll die Lacknasspartikel binden.

An diesen Staubraum bzw. an dieses Bett schließen sich Filterplatten an. Nach dem Durchtritt durch die Filterplatten soll die Luft möglichst rein sein.

Anstelle von Filterplatten könnten auch die zuvor genannten Filterpatronen eingesetzt werden, da diese eine höhere Filterfläche zeigen. Allerdings müssten die Filterpatronen günstige Strömungsverhältnisse im Staubraum erzeugen, damit dort möglichst viele Lackpartikel vom Kalksteinmehl gebunden werden.

### Darstellung der Erfindung

Der Erfindung liegt die Aufgabe zugrunde, eine Filterpatrone anzugeben, welche die mittlere Aufstiegsgeschwindigkeit von Luft beeinflusst und einen möglichst optimalen Filtrationsbetrieb bewirkt.

Die vorliegende Erfindung löst die zuvor genannte Aufgabe durch die Merkmale des Patentanspruchs 1.

Erfindungsgemäß ist erkannt worden, dass durch das erfindungsgemäße Filterelement eine optimale Raumausnutzung möglich ist, wenn mehrere solcher Filterelemente nebeneinander angeordnet werden. Es kommt zu einer Druckdifferenzverringerung im Gesamtsystem, da eine größere Luftaustrittsfläche auf einer Platte geschaffen wird.

Des Weiteren wird aufgrund der speziellen Geometrie der Filterpatrone und der staubluftseitigen Anordnung in einem Gehäuse eine für den Prozess bessere Strömungssituation im Staubraum erzeugt. Es kommt quasi zu einer Wirbelschichtbildung. Die Verweilzeit des Kalkstaubes zur Lackbindung wird erhöht. Überdies wird die Reinluftqualität durch eine erhöhte Filterfläche verbessert.

Erfindungsgemäß wurde ein Vorurteil der Fachwelt überwunden, dass nämlich eckige Filterpatronen in konventionellen Entstaubungsanlagen eher nachteilig sind. Das Filtermedium ist nämlich an einem Ende der Filterpatrone rechteckig oder quadratisch und am anderen Ende rund ausgeformt.

Die Durchströmungsgeschwindigkeit pro Filterflächeneinheit wird in einer eckigen Filterpatrone verringert. Dies hängt damit zusammen, dass bei einer eckigen Filterpatrone im Vergleich zu einer runden Filterpatrone eines Außendurchmessers von 324 mm und eines Innendurchmessers von 215 mm eine um 18 % größere Luftaustrittsfläche am Kopfbereich zur Verfügung steht. Hieraus resultiert eine geringere Druckdifferenz bei gleichem Volumenstrom.

Der längliche Filterkörper könnte konisch verlaufen, sich nämlich in einer Richtung verjüngen. Hierdurch ist ein besonders günstiges Strömungsprofil in einem Wirbelbett erzeugbar.

Die Filterpatrone könnte eine Breite von 100 bis 500 mm aufweisen.

Die Filterpatrone könnte eine Höhe von 10 mm bis 2500 mm aufweisen.

Das Verhältnis Höhe zu Breite der Filterpatrone könnte 1 zu 1 bis 5 zu 1 betragen. Filterpatronen mit diesem Länge-Breite-Verhältnis können vertikal bzw. hängend angeordnet horizontal angeordnete Filterplatten oder Röhren-Elemente vorteilhaft ersetzen.

Das Filtermedium könnte als Faltenbalg ausgebildet sein, dessen Faltenrücken sich parallel zu seiner Längsachse erstrecken. Hierdurch zeigt die Filterpatrone eine hohe Stabilität gegen ein Stauchen in Längsrichtung.

Der Faltenbalg könnte endlos umlaufend ausgestaltet sein. So werden Schnittkanten und Klebestellen minimiert.

Die Tiefe der Falten des Faltenbalgs könnte 15 bis 50 mm betragen. Hierdurch ist eine gleichmäßige und homogene Verteilung der Strömungsgeschwindigkeiten realisiert.

Dem Faltenbalg könnten Stützbänder zugeordnet sein. Dem Faltenbalg könnten vorzugsweise horizontal angeordnete Stützbänder zugeordnet sein. Hierdurch wird der Faltenabstand dauerhaft eingehalten.

Der Faltenbalg könnte an einem Deckel in Polyurethan vergossen sein. Der Faltenbalg könnte am Deckel und/ oder Boden in Polyurethan vergossen sein. Hierdurch werden Leckagen am Boden und/ oder Deckel vermieden.

Das Filtermedium könnte einen Stützkorb umgeben, der in Polyurethan vergossen ist. Hierdurch wird ein Kollabieren des Faltenbalgs verhindert.

Der Stützkorb könnte am Deckel und/ oder Boden in Polyurethan vergossen sein. So wird der Stützkorb dauerhaft fixiert.

Auf einem Deckel könnte eine umlaufende Dichtung aufgebracht sein. Auf dem Deckel und/ oder auf dem Boden könnte eine vorzugsweise silikonfreie Dichtung aufgebracht sein. So kann eine dichte Anlage des Deckels und/ oder Bodens an einem Flansch sicher gestellt werden.

Die Filterpatrone könnte silikonfrei sein.

Das Filtermedium könnte mehrlagig ausgebildet sein, eine Nanofaserschicht aufweisen und antistatisch ausgestaltet sein. Hierdurch können sehr feine Schmutzpartikel gefiltert werden. Durch die elektrisch antistatische Ausrüstung wird ein Anhaften von feinen Schmutzpartikeln verringert.

Das Filtermedium ist mit Druckluft abreinigbar.

Eine Anordnung könnte ein Filtergehäuse mit einem Staubraum und mindestens eine Filterpatrone der hier beschriebenen Art umfassen, wobei die Filterpatrone in den Staubraum hineinragt.

Die hier beschriebene Filterpatrone eignet sich zur Verwendung in einem Verfahren, bei dem in Nasslackierprozessen ein übliches Nass-Auswaschungs-System, welches Wasser einsetzt, durch ein trockenes, mit Filterelementen arbeitendes System ersetzt wird.

Um das Verkleben der Filterelemente mit Lack zu verhindern, wird ein inertes Filterhilfsmittel, nämlich Kalksteinmehl, im Überschuss verwendet, welches nasse Lackpartikel aus einem Overspray im Luftstrom oder auf einer Filteroberfläche bindet. In den bekannten Systemen werden Filterplatten und Röhren-Filterelemente verwendet, die horizontal in die Filtergehäuse eingebaut werden.

Durch die hier beschriebene Filterpatrone wird im Staubraum eine bessere Strömungssituation geschaffen. Es erfolgt quasi eine Wirbelschichtbildung. Dies hängt mit der Geometrie der Filterpatrone sowie deren staubluftseitiger Anordnung im Filtergehäuse zusammen. Die Verweilzeit des Kalksteinmehls zur Lackbindung wird erhöht.

Mit der hier beschriebenen Filterpatrone ist eine gleichmäßige und homogene Verteilung der Strömungsgeschwindigkeiten durch Ausbildung von äquidistanten Filterpatronenabständen realisierbar.

Durch geeignete Auslegung der Abstände, lässt sich der Bereich zwischen den Filterpatronen als quasi-stationäre Wirbelschicht betreiben. Gleichzeitig kann in vergleichbarem Bauraum, der durch den Durchmesser einer runden Filterpatrone bestimmt wird, mehr Filtermedium bei gleichem Faltenabstand untergebracht werden.

Darüber hinaus besteht die Möglichkeit, die Ausbildung des Kopfes der Filterpatrone in einer neuartigen Form oder der Art der Befestigung auszuführen.

Eine spezielle Ausbildung der Filterpatrone ermöglicht es, eine oder mehrere Filterpatronen einfach und sicher mit Hilfe von Schnellverschlüssen rohgasseitig zu montieren. Eine Befestigung kann über einen Bajonettverschluß oder Klickverschluß erfolgen. Denkbar ist auch eine Mehrfachmontage von bis zu vier Filterpatronen in Reihe mittels eines Montagegestänges.

Das hier beschriebene Filterelement wird bevorzugt zur Trockenabscheidung in einem Nasslackier-Verfahren verwendet. Des Weiteren sind Verwendungen in der industriellen Luftfiltration und in der Lackabscheidung, insbesondere in der Automobilindustrie, denkbar.

Konkret ist eine Verwendung in der Luftfiltration denkbar, bei welcher Partikeln und/ oder Aerosole in größeren Mengen in einer Precoatschicht oder Wirbelschicht abgeschieden werden.

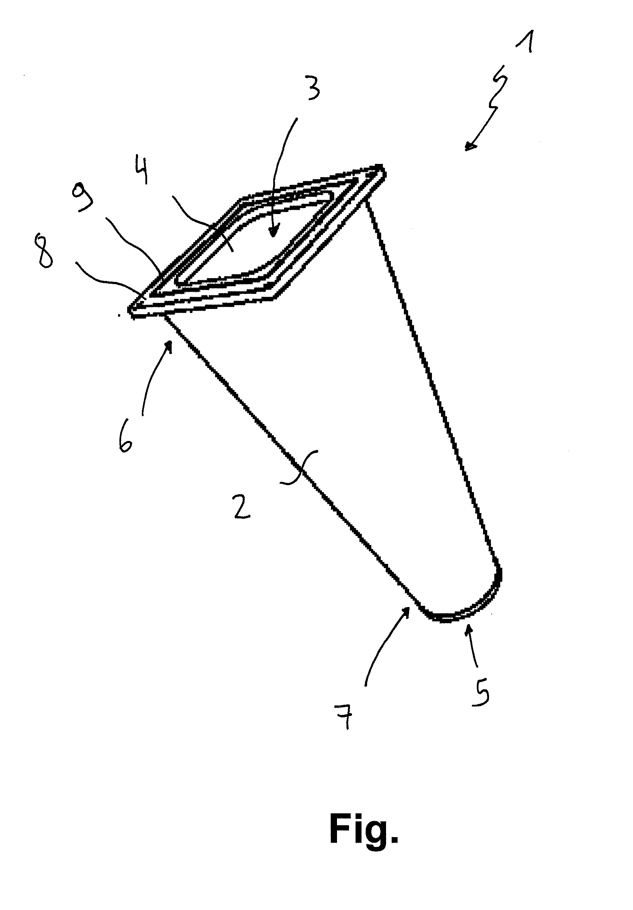

### Kurzbeschreibung der Zeichnung

In der Zeichnung zeigt die einzige
- Fig.: eine perspektivische Ansicht einer Filterpatrone.

### Ausführung der Erfindung

Die einzige Fig. zeigt eine Filterpatrone 1, umfassend ein Filtermedium 2, welches derart ausgeformt ist, dass es einen Zentraldurchgang 3 umfängt, wobei der Zentraldurchgang 3 eine erste Öffnung 4 aufweist und an einem geschlossenen Patronenboden 5 endet und wobei sich das Filtermedium 2 zwischen der ersten Öffnung 4 und dem Patronenboden 5 erstreckt und dabei einen länglichen Filterkörper bildet.

Das Filtermedium 2 ist an einem Ende 6 der Filterpatrone 1 rechteckig oder quadratisch und am anderen Ende 7 rund ausgeformt.

Der längliche Filterkörper verläuft konisch, verjüngt sich nämlich in einer Richtung. Der Filterkörper verjüngt sich in Richtung des Patronenbodens 5.

Die Filterpatrone 1 weist eine Breite von 100 bis 500 mm und eine Höhe von 1 mm bis 2500 mm auf. Das Verhältnis Höhe zu Breite der Filterpatrone1 beträgt 1 zu 1 bis 5 zu 1.

Das Filtermedium 2 ist als Faltenbalg ausgebildet, dessen Faltenrücken sich parallel zu seiner Längsachse erstrecken. Der Faltenbalg ist endlos umlaufend ausgestaltet. Die Tiefe der Falten des Faltenbalgs beträgt 15 bis 50 mm beträgt.

Dem Faltenbalg sind Stützbänder zugeordnet. Der Faltenbalg ist an einem Deckel in Polyurethan vergossen. Das Filtermedium 2 umgibt einen Stützkorb, der in Polyurethan vergossen ist.

Auf einem Deckel 8 ist eine umlaufende Dichtung 9 aufgebracht.

Das Filtermedium 2 ist mehrlagig ausgebildet, weist eine Nanofaserschicht auf und ist antistatisch ausgestaltet.

## Patentansprüche

1. Filterpatrone (1), umfassend ein Filtermedium (2), welches derart ausgeformt ist, dass es einen Zentraldurchgang (3) umfängt, wobei der Zentraldurchgang (3) eine erste Öffnung (4) aufweist und an einem Patronenboden (5) endet und wobei sich das Filtermedium (2) zwischen der ersten Öffnung (4) und dem Patronenboden (5) erstreckt und dabei einen länglichen Filterkörper bildet,
**dadurch gekennzeichnet, dass** das Filtermedium (2) an einem Ende (6) der Filterpatrone (1) rechteckig oder quadratisch und am anderen Ende (7) rund ausgeformt ist.

2. Filterpatrone nach Anspruch 1, **dadurch gekennzeichnet, dass** der längliche Filterkörper konisch verläuft, sich nämlich in einer Richtung verjüngt.

3. Filterpatrone nach Anspruch 1 oder 2, **gekennzeichnet durch** eine Breite von 100 bis 500 mm.

4. Filterpatrone nach einem der voranstehenden Ansprüche,
**gekennzeichnet durch** eine Höhe von 10 mm bis 2500 mm.

5. Filterpatrone nach einem der voranstehenden Ansprüche, **dadurch gekennzeichnet, dass** das Verhältnis Höhe zu Breite der Filterpatrone (1) 1 zu 1 bis 5 zu 1 beträgt.

6. Filterpatrone nach einem der voranstehenden Ansprüche, **dadurch gekennzeichnet, dass** das Filtermedium (2) als Faltenbalg ausgebildet ist, dessen Faltenrücken sich parallel zu seiner Längsachse erstrecken.

7. Filterpatrone nach dem voranstehenden Anspruch, **dadurch gekennzeichnet, dass** der Faltenbalg endlos umlaufend ausgestaltet ist.

8. Filterpatrone nach Anspruch 6 oder 7, **dadurch gekennzeichnet, dass** die Tiefe der Falten des Faltenbalgs 15 bis 50 mm beträgt.

9. Filterpatrone nach einem der voranstehenden Ansprüche, **dadurch gekennzeichnet, dass** dem Faltenbalg Stützbänder zugeordnet sind.

10. Filterpatrone nach einem der voranstehenden Ansprüche, **dadurch gekennzeichnet, dass** der Faltenbalg an einem Deckel (8) in Polyurethan vergossen ist.

11. Filterpatrone nach einem der voranstehenden Ansprüche, **dadurch gekennzeichnet, dass** das Filtermedium (2) einen Stützkorb umgibt, der in Polyurethan vergossen ist.

12. Filterpatrone nach einem der voranstehenden Ansprüche, **dadurch gekennzeichnet, dass** auf einem Deckel (8) eine umlaufende Dichtung (9) aufgebracht ist.

13. Filterpatrone nach einem der voranstehenden Ansprüche,
**gekennzeichnet durch** eine Silikonfreiheit.

14. Filterpatrone nach einem der voranstehenden Ansprüche, **dadurch gekennzeichnet, dass** das Filtermedium (2) mehrlagig ausgebildet ist, eine Nanofaserschicht aufweist und antistatisch ausgestaltet ist.

15. Anordnung, umfassend ein Filtergehäuse mit einem Staubraum und mindestens eine Filterpatrone (1) nach einem der voranstehenden Ansprüche, wobei die Filterpatrone (1) in den Staubraum hineinragt.
